# EUROPEAN PATENT APPLICATION

(11) **EP 2 527 295 A1**
(43) Date of publication of application: **28.11.2012**
(21) Application number: 12180262.3
(22) Date of filing: 19.11.2008
(51) Int. Cl.: C01B 33/44, C08K 3/34, C08K 7/26, C09C 1/40, C09C 1/42

(54) **Use of nanocomposite materials to reinforce infrared, ultraviolet and visible electromagnetic radiation blocking properties in plastics**

(30) Priority: 23.11.2007 ES 200703100
(62) Divisional of application: 08851486.4
(71) Applicant: Nanobiomatters, S.L., 46980 Paterna (Valencia) (ES)
(72) Inventor: Lagaron Cabello, José Maria, 46980 Paterna (Valencia) (ES); Sanchez Garcia, María Dolores, 46980 Paterna (Valencia) (ES); Gimenez Torres, Enrique, 46980 Paterna (Valencia) (ES)
(74) Representative: Pons Ariño, Angel

(57) **Abstract**

The invention relates to the use of nanocomposite materials in plastic packaging applications to reinforce their ability to protect against infrared and ultraviolet-visible radiation. This nanocomposites comprises a plastic matrix, a nanoreinforcement which is a clay and optionally an organic or hybrid substances intercalated in the laminar structure of the clay. The method for obtaining said nanocomposite comprises the following steps: reducing the size of the laminar particles by mechanical action, removal of crystalline oxides and hard particles not modified, obtaining fine laminar material or laminar structures, pre-treating the laminar structures using precursors, and adding the product of the above steps, either in the liquid state or in the dry state, to a plastic matrix.

## Description

### Technical field of the invention

The present invention relates to novel nanocomposite materials and their development thereof, for providing them with the advantageous capacity of blocking infrared, UV-VIS radiation. Said blocking is obtained by incorporating a specific type of natural and/or synthetic clay layers and that may or may not be intercalated with organic or with organic/inorganic hybrid materials, which are incorporated into a plastic matrix by solvent deposition and evaporation and/or by melt mixing processes.

Besides, the present invention relates to the use of novel materials for their application in multiple areas. The novel materials incorporate laminar nanoreinforcements which are added to thermoplastic and thermosetting polymeric materials for their application as a barrier against electromagnetic radiation in infrared, UV and visible regions. These nanocomposites allow blocking said electromagnetic radiation, either in a global or selective manner, due to the chemical composition thereof, their surface modification and the good dispersion of clay layers in the plastic matrix, and they lead to the absorption of the radiation that goes through the composite material. Due to the reduced size of the fillers, their being nanometric in thickness, and their high aspect/chemical function ratio, the application thereof becomes advantageous because they additionally result in synergies in other properties, such as the improvement of thermal or mechanical properties or of barrier properties to gases and vapours, and allow the possibility of incorporating active substances, such as antimicrobials, antioxidants, and bioactives, and allow fixing or controlled release thereof, as desired. These plastic material nanocomposites, may be prepared by different processing techniques conventionally used in the plastic processing and manufacturing, such as casting techniques and/or lamination (dissolution and evaporation of solvent) or melt mixing, for its advantageous application in the packaging of products of interest for the food industry as well as applications in other sectors.

### Background of the invention

In the field of polymers, one of the areas generating most interest is the development of composite materials and more specifically of nanocomposites. There exist different preparation techniques for these biodegradable nanocomposites, both by the casting method (Ogata N, Jimenez G, Kawai H, Ogihara T; J Polym Sci Part B: Polym Phys 1997; 35:389-396, Chen GX, Hao GJ, Guo TY, Song MD, Zhang BH; J Appl Polym Sci 2004; 93:655-61, Jimenez G, Ogata N, Kawai H, Ogihara T; J Appl Polym Sci 1997; 64:2211-20), as well as by melt mixing method (Sinha Ray S, Yamada K, Okamoto M, Ueda K. Nano Lett 2002; 2:1093-6, M.D. Sanchez-Garcia, E. Gimenez and J.M. Lagaron. (In press), Di Y, lannace S, Maio ED, Nicolais L. J Polym Sci Part B: Polym Phys 2003; 41:670-8.) and by the in-situ polymerization method (Messersmith PB, Giannelis EP. Chem Mater 1993; 5:1064-6, Knani D, Gutman AL, Kohn DH. J Polym Sci Part A: Polym Chem 1993; 31:1221-32). Besides, these novel nanocomposites and their processing techniques are described in US Patents 5747560; 4618528; 4528235; 4874728; 6391449; 6486253; 6376591 and 6156835; WO 95/14733; WO 93/04117, and more specifically in relation to the present invention in W02007074184A1. These documents show some patent examples in the literature of clay/polymer nanocomposites prepared from modified clays. These documents describe a composite material as an exfoliated or intercalated layer, with a tactoid structure of nanometric dimensions, that comprises intercalated clay dispersed in a polymer matrix, such as an oligomer, a polymer, or a mixture thereof.

For example, US Patent 4739007 describes the preparation of Nylon-6-clay nanocomposites from montmorillonites treated with alkylammonium salts by melt mixing method.

However, even including the numerous nanocomposite preparation methods described, and with different types of modified clays, there is no description of the manufacturing of nanocomposite materials with improved physical, mechanical, thermal and barrier properties when compared to the pure polymer and also with the capacity of blocking electromagnetic radiation, and with the additional capacity of allowing the fixing and/or the controlled release of antimicrobial, antioxidant and bioactive substances.

The protection against electromagnetic radiation is a basic requirement for many plastic applications, such as preserving packed food quality or greenhouse plastics. In this latter case metal and paper containers, which are opaque themselves, have this function; however, the most used plastic containers are generally transparent to a great part of electromagnetic radiation in the infrared (IR), ultraviolet (UV) and visible (VIS) zone. Therefore, research is being done on the protection against UV-VIS light in polymer packaging for sensitive food such as fruit, vegetables, juice, vitamin and sports drinks (M. van Aardt, S. E. Duncan, J. E. Marcy, T. E. Long , and C. R. Hackney. J DAIRY SCI 84 1341-1347 JUN 2001, Conrad, KR, Davidson, VJ, Mulholland, DL, Britt, I.J, Yada, S. J FOOD SCI 70 (1): E19-E25 JAN-FEB 2005, Goldhan G, Rieblinger K. European Food & Drink Review : No. 3, Autumn, 69, 71-72, 2002). There exist studies that show the UV-VIS light transmission spectra of polymer nanocomposite of some plastic materials (T.D. Fornes, P.J. Yoon, D.R. Polymer 44 (2003) 7545-755), polyamide (Yeh, J.M., Chen, C.L., Kuo, T.H., Su, W.F.H., Huang, S.Y., Liaw, D.J., Lu, H.Y.,Liu, C.F., Yu, Y.H. Journal of Applied Polymer Science, Vol 92, 1072-1079 (2004)), PVC (Chaoying Wan, Yong Zhang, Yinxi Zhang. Polymer Testing 23 (2004) 299-306), Polivinil alcohol (A. H. Bhat, A. K. Banthia. Journal of Applied Polymer Science, Vol. 103, 238-243 (2007)) and other conventional ones (Guo-An Wang, Cheng-Chien Wang, Chuh-Yung Chen. Polymer Degradation and Stability 91 (2006) 2443-2450). However, there has not been published any specific design describing the manufacturing process of nanocomposites for electromagnetic radiation protection applications.

The wavelengths of interest in barrier applications against electromagnetic radiation are mainly between 200 and 2,200nm. This section of the electromagnetic spectrum can be divided into 3 zones: the Ultraviolet (UV) zone (100-400), the visible zone (400-700 nm) and the near infrared zone (700-2,200 nm). Ultraviolet radiation is only 3% of the total radiation received by the Earth, but this radiation is responsible for the chemical reactions, polymer degradation and even bleaching. For this reason, blocking the electromagnetic radiation is an important parameter for plastics in applications in multiple fields, such as food packaging and greenhouse films.

### Brief description of the invention

As it has been described herein above, the present invention describes novel composite materials with barrier properties against the passage of electromagnetic radiation, obtained by the introduction of laminar nanocomposites in plastic materials, with advantageous applications in the sectors of coatings and of the packaging and packing, particularly for the industry of packaging for products aimed at product storage, since this active packaging enables to considerably improve barrier properties, as well as to protect food against UV-VIS radiation and allows for the fixing and/or controlled release of active substances and for other applications such as greenhouse films, and biomedical and pharmaceutical applications.

The laminar nanocomposites are mainly based on vermiculite- and kaolinite-type phyllosilicates and/or mixtures thereof among one another or with other phyllosilicates, and in all cases with o without surface modification. These two minerals have themselves unique properties for electromagnetic radiation blocking due to their natural composition and coloration. The surface modification, when it is applied, enables to make compatible, increase the electromagnetic radiation blocking capacity and for the clay to be better exfoliated in nonpolar plastic matrices, thus enabling to obtain a good morphology for improving electromagnetic radiation barrier and blocking properties. These nanocomposites are prepared by lamination or casting techniques and/or melt mixing.

### Brief description of the drawings

There follows a description of the invention with reference to the attached drawings, in which:

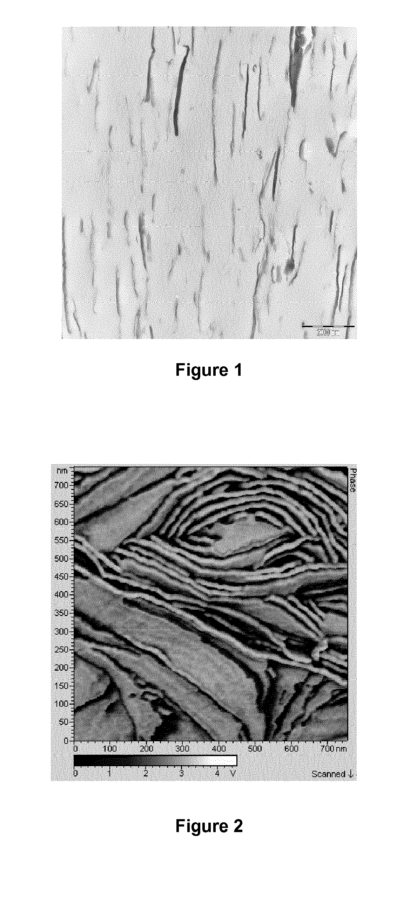

Figure 1 is an image obtained by a transmission electron microscope (TEM) showing the main morphologies that can be observed in nanocomposites obtained according to the present invention. The image shows us that the clay layers are partially exfoliated in the polymer matrix, and that they show a thickness of nanometric sizes. It should be noted the high aspect ratio (length/thickness ratio) presented by the dispersed layers, which guarantees the high protection against the passage of electromagnetic radiation.
Figure 2 is an image obtained by an atomic force microscope showing phase morphologies that may be observed in nanocomposites of laminar biodegradable materials according to the present invention. In this photo, it can be observed that the vermiculite layers are perfectly intercalated and dispersed along the matrix producing a very effective blocking effect.

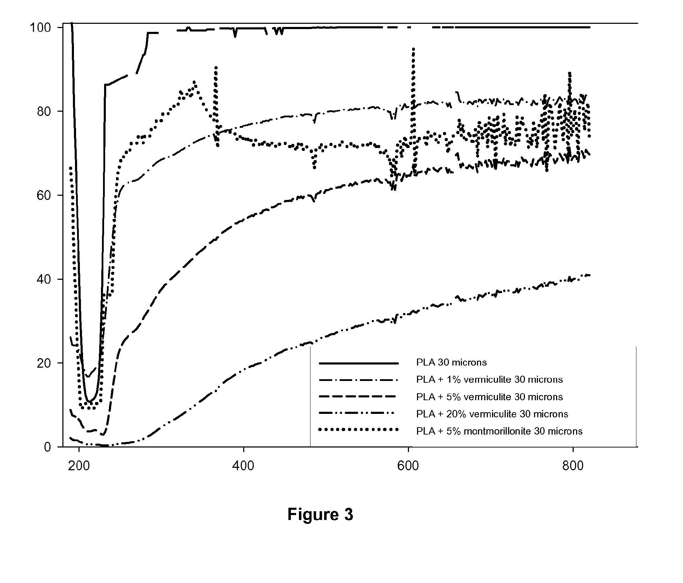

Figure 3 presents the UV-VIS spectra obtained by a UV-VIS spectrophotometer. This graphic shows the spectra of 30-micron films of the highly transparent polylactic acid polymer and its nanocomposites, with different contents and types of clays. It is observed that when the content of vermiculite-based clays increases, a more intense UV-Vis radiation blocking is produced. It is also observed that for the same nanoadditive content (5% Wt.) the higher reduction of UV-Vis light transmission is for the nanocomposite with vermiculite-based clay, compared to that of the nanocomposite with montmorillonite-based clay. This is due to the high specific light blocking properties, particularly against ultraviolet light, of the vermiculites and kaolinite clays modified with those of other phyllosilicates. On the y-axis the wavelength (nm) is measured against the transmission % on the x-axis.

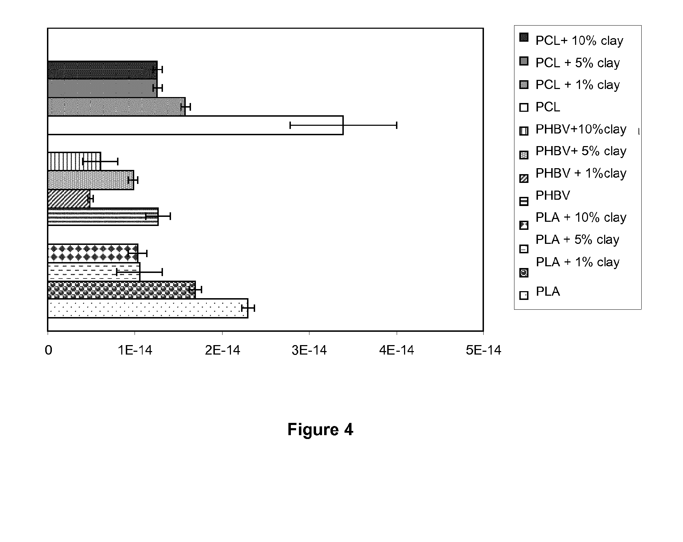

Figure 4 shows a graphic with water permeability values (y-axis measured in Kg m/s m² Pa) for several plastic materials (polylactic acid, polycaprolactone and polyhydroxybutyrate-valerate copolymer) and their nanocomposites with different clay contents. It is observed how water permeability is considerably reduced in the case of nanocomposites for the three biopolymers.

### Detailed description of the invention

The present invention describes novel nanocomposite materials (nanocomposite polymer films), from the incorporation of nanoreinforcements of clays of laminar silicate and/or layered double hydroxide types, although the vermiculite- and kaolinite-type clays, with or without organic modification, will be preferably used. These materials will be characterized by the introduction of fillers of the laminar type with a thickness in the range of nanometres, in plastic matrices. These materials present some improvements in the thermal, mechanical and barrier properties, in relation to the pure material, allow electromagnetic radiation blocking, and also allow the controlled release of substances with antimicrobial, antioxidant and bioactive properties.

The novel method for the manufacturing of the nanocomposite materials described in the present invention, which may be based on structures such as laminar phyllosilicates, including clays (for example, montmorillonite, kaolinite, bentonite, smectite, hectorite, sepiolite, saponite, halloysite, vermiculite, mica) or synthetic or natural laminar layered double hydroxydes with a laminar structure and which will be preferably based on vermiculite-and kaolinite-type materials, and which are or are not intercalated with materials of the organic type, comprises the following stages:
1) Reducing the size of the laminar particles by mechanical action, for example, by means of grinding technologies.
2) Filtering in vibrating sieves, filter press or any other wet/dry filtering system until reaching an interval comprised from 0.1 to 100 microns, preferably a decrease of the particle size under 25 microns is obtained, and more preferably under 3 microns, in the so-called D90 (no more than 10% of the material is above this value).
3) Removal of the organic matter by, and in a non-limiting sense, decanting techniques, supernatant removal or chemical reaction with oxidant substances such as peroxides.
4) Removal of the crystalline oxides and hard particles that are not subject to modification by centrifugation and/or gravimetric processes in dissolution or by turbodryers, preferably by either a wet or dry centrifugation process followed by atomization (typically called spray drying) with controlled depression.
5) Obtaining thin layers, considered the starting product of the present invention.
6) Pre-treatment of laminar structures in one or in several steps, by means of precursors of the expanding type as shown in Table 1.

**(Table 1)**

| **MODIFIER** | **d**_{MODIFIER} **(nm)** | **MODIFIER** | **d**_{MODIFIER} **(nm)** |
|---|---|---|---|
| *Non-modified Kaolinite* | 0.72 | *Non-modified Montmorillonite* | 0.98 |
| *Dimethyl sulfoxide* | 1.11 | *Ethylene polyoxide* | 1.12 |
| *N-methyl formamide (NMF)* | 1.02 | *Cellulose acetobutyrate* | 1.13 |
| *Hydrated hydrazine* | 1.03 | *Calcium butyrate* | 0.92 |
| *Water* | 0.78 | *Saccarose acetoisobutyrate* | 1.08 |
| *Alcohols* | 1.10 | *Manganese butyrate* | 0.95 |
| *Hydrazyne anhydrous* | 0.96 | *Carboxymethyl starch* | >3 |
| *Acetamide* | 1.09 | *Starch* | 1.21 |
| *DMSO+Methanol(MeOH)* | 1.12 | *Hidroxyethyl starch* | 1.15 |
| *Hexanoic acid* | 1.23 | *Hydroxypropyl starch* | 1.14 |
| *Acrylamides* | 1.44 | *Adonitol* | 1.04 |
| *Glucose* | 1.25 | *Sorbitol* | 1.19 |
| *Archylamide* | 1.14 | *Dibenzylidene sorbitol* | 1.16 |
| *Salicylic acid* | 1.07 | *Ethylene glycol* | 0.95 |
| *Manganese acetate* | 1.41 | *Polypropylene glycol* | 1.01 |
| *Caprolactam* | 1.18 | *Propylene glycol* | 1.01 |
| *Vinyl acetate* | 1.21 | *Glycolic acid* | 1.06 |
| *Potassium acetate* | 1.39 | *Triethylene glycol* | 1.08 |
| *Tannic acid* | 1.09 | *Tetraethylene glycol* | 1.06 |
| *Maleic acid* | 1.20 | *Glycerol* | 1.02 |
| *Maleic anhydride* | 1.20 | *1,2-Propanodiol* | 1.09 |
| *Lactic acid* | 1.08 | *1,3-Propanodiol* | 0.98 |
| *Adipic acid* | 1.03 | *Polyethylene glycol M_{w=}1000* | 1.11 |
| *Acetic acid* | 1.10 | *Polyethylene glycol M_{w}=3400* | 1.12 |
| *Acetaldehyde* | 0.91 | *Sorbitan* | 1.09 |
| *Butyric acid* | 1.01 | *Dipropylene glycol* | 1.03 |
| *Tetrafluoroethylene* | 0.98 | *Diethylene glycol* | 1.04 |
| *Chlorotrifluoroethylene* | 1.05 | *Vinyl pyrrolidone* | 1.23 |
| *Hexamethylene* | 1.02 | *Vinyl versatate* | 1.11 |

Preferably the expanders are selected from the group formed by DMSO, alcohols, acetates, or water and mixtures thereof, which activate the fines by an initial increase of the basal spacing of the layers and modify the surface characteristics of the clay. The penetration of the precursors will be accelerated by means of temperature, a homogenizer working in turbulent regime, ultrasound, pressure or combination thereof. They may be dried by evaporation in a stove, lyophilization, centrifugation and/or gravimetric processes in dissolution or turbodryers or by atomization typically called spray drying. According to another preferred embodiment of the present invention, the dissolution of the intercalated precursor may be used, without a previous drying process, as a starting medium for the following stage of modifier incorporation.
7) Optionally, intercalating in an aqueous base or with polar solvents, organic or hybrid substances in the laminar structure. In this same sense, the compounds to be intercalated are selected, and in a non-limiting sense, from the group formed by PVOH, EVOH and derivates of the same family, and/or biopolymers such as peptides and natural or synthetic proteins obtained by means of chemistry or genetic modification of microorganisms or plants, and natural or synthetic polysaccharides obtained by means of chemistry or genetic modification of microorganisms or plants and polypeptides, nucleic acids and synthetic nucleic acid polymers obtained by chemistry or genetic modification of microorganisms or plants, and biodegradable polyesters such as polylactic acid, polylactic-glycolic acid, adipic acid and derivatives and the polydroxyalkanoates, preferably polydroxybutyrate and their copolymers with valerates, biomedical materials such as the hydroxyapatites and phosphates of organic salts and quaternary ammonium salts - preferably hexadecyltrimethylammonium bromide - and other particles or nanoparticles with electromagnetic radiation blocking capacity, such as titanium dioxide and others typically used for this function.

When the organic material that is intercalated is the EVOH or any material of the family thereof, with molar contents of ethylene preferably lower than 48%, and more preferably lower than 29%, they are taken to saturation in an aqueous medium or in specific solvents of the alcoholic type and mixtures of alcohols and water, more preferably of water and isopropanol in water volume proportions greater than 50%.

On the other hand, the biopolymers with or without plasticizers, with or without crosslinkers and with or without emulsifiers or tensioactives or another type of additives, belong to the group formed by synthetic and natural (vegetable or animal) polysaccharides, such as cellulose and derivatives, carrageenans and derivatives, alginates, dextran, gum arabic and preferably chitosan or any of its natural or synthetic derivatives, more preferably chitosan salts and even more preferably chitosan acetate, and proteins derived from plants and animals as well as maize proteins (zein), gluten derivatives, such as gluten or its gliadin and glutenin fractions and more preferably gelatin, casein and soya proteins and derivatives thereof, as well as natural or synthetic polypeptides preferably of the elastin type obtained by means of chemistry or genetic modification of microorganisms or plants and mixtures thereof.

In the case of chitosan the deacetylation degree will be preferably higher than 80% and more preferably higher than 87%. The penetration of the precursors will be accelerated by means of temperature, a homogenizer working in turbulent regime, ultrasound, pressure or a combination thereof.

In a subsequent or alternative step to the dissolution of the fine agents pretreated with the previously proposed precursors and modifying agents, low molecular weight substances having an active or bioactive nature will be optionally added so as to be intercalated or released in a controlled manner, giving rise to nanocomposites with active or bioactive capacity. The active substances will be ethanol, or ethylene, or of the essential oil type, preferably thymol, carvacrol, linalool and mixtures, or small-sized antimicrobial peptides (bacteriocins) either natural or obtained by genetic modification, preferably nisins, enterocins, lacticins and lysozyme or natural or synthetic antioxidants, preferably polyphenols, preferably flavonoids, rosemary extract and vitamins, preferably ascorbic acid or vitamin C, or drugs, or bioavailable enzymes or calcium compounds. It is expected that these elements may be fixed or released from the nanocomposite towards the product in a controlled manner (matrix control) and exert their active or bioactive role, that they may be released from the matrix and that the nanoparticles control the kinetics (nanoadditive control) or they may be released from both. The contents to be added are generally lower than 80% in dissolution volume, preferably lower than 12% and more preferably lower than 8%. The penetration of these substances will be accelerated by means of temperature, a homogenizer working in turbulent regime, ultrasound, pressure or combination thereof.
8) Addition of the product resulting from the previous stages in liquid or solid state to a plastic matrix. In this case they are added to the plastic matrix during the processing thereof, using any manufacturing method related to the plastic processing industry, such as extrusion, injection, blowing, compression molding, resin transfer molding, calendering, thermal shock, internal mixing, ultrasound, coextrusion, co-injection and a combination thereof. According to a preferred embodiment, the plastic matrix is preferably made of PVOH, EVOH or derivatives and biodegradable materials such as proteins, polysaccharides and polyesters or mixtures thereof and may contain any type of additives typically added to plastics to improve their processing or properties. Other products with intrinsic electromagnetic radiation barrier properties, such as titanium dioxide or other products may also be additionally added so as to reinforce the protection.

Alternatively, the resulting compound of additives and modifiers may be precipitated by evaporation and, the plastic matrix may also be optionally precipitated in dissolution, using drying methodologies such as heating and/or centrifugation and/or gravimetric processes in dissolution or turbodryers and/or atomization (spray drying); by cooling or by addition of a precipitating agent to form either an additive powder or a masterbatch, or what is the same an additive concentrate in a plastic matrix.

Said additive concentrate may be treated in the following ways:
a) it is triturated to give rise to a particulate product by grinding.
b) it is processed by means of any plastic processing method to obtain pellets in solid state.
c) it is processed by means of any manufacturing method related to the plastic processing industry such as extrusion, injection, blowing, compression molding, resin transfer molding, calendering, thermal shock, internal mixing, ultrasound, coextrusion, co-injection and a combination thereof.
d) it is used as an additive on any plastic matrix (including the aforementioned biopolymers and biomedical materials) in a conventional route of plastic processing such as the aforementioned ones.

According to another fundamental aspect of the present invention, the nanocomposite materials obtained by means of the method described in the present invention are used to reinforce the electromagnetic radiation blocking in plastic packaging applications in general, and in food and food component packaging applications in particular, for biomedical applications such as nanobiocomposites and in pharmaceutical applications for optionally releasing active ingredients, as a barrier to solvents and organic products, such as aromas and aroma components, oils, fats and hydrocarbons, and to mixed products of organic and inorganic nature, for applications requiring a biodegradable or compostable nature, for active packaging requiring antimicrobial, antioxidant nature or of any type requiring the controlled release of low molecular weight substances, preferably volatile, for applications requiring antimicrobial capacity and for the use of biopolymers either without the need of using plasticizers or with the need of using lower amounts thereof.

All the features and advantages set forth, as well as other features proper to the invention, may be better understood with the following examples. Furthermore, the examples are illustrative rather than limiting so that the present invention can be better understood.

### EXAMPLES

Example 1: Polylactic acid films with different contents (1%, 5%, 10% and 20%) of vermiculite-type clays modified with 40% mass of hexadecyltrimethylammonium bromide and of a montmorillonite-type clay (5%) modified with 40% mass of hexadecyltrimethylammonium bromide. Initially, the modified clay was dispersed in a chloroform dissolution, under ambient conditions. The polymer (polylactic acid) was added at 5% Wt. in the organic solvent. A thin film was formed by solvent evaporation, casting process. These nanocomposites were characterized by studying their morphology, as well as their barrier properties against water, limonene (food aroma simulator) and oxygen. In another study the UV-Vis light dispersion capacity was proved. For this, the UV-Vis radiation absorption capacity was tested on castings of around 30 microns. While the pure polymer has a transmittance of around 100%, the PLA+20% clay films enable to reduce UV light transmission 85-90%, thus reaching an effective blocking of UV radiation passage and also of a great amount of the visible radiation passage. In the case of the visible spectrum, a 70% radiation blocking was achieved with the addition of 20% of clay content (See Figure 3). This type of appropriately modified vermiculite-type clays produces a strong light blocking in both the UV and the visible region, due to the great nanometric dispersion reached in the matrix. The application of these biodegradable polylactic acid nanocomposites gives rise to the creation of very interesting packaging, which can be used for example in the preservation of food sensitive to UV-Vis radiation and to low molecular weight gases such as oxygen, steam and limonene.

Example 2: Nanocomposite material films of PLA, polycaprolactone (PCL) and polyhydroxybutyrate-co-valerate (PHBV) by introduction of different contents of vermiculite-type clay modified with hexadecyltrimethylammonium bromide. Initially, the clay was dispersed in a chloroform dissolution, under ambient conditions. The polymer (polylactic acid) was added at 5% Wt. in chloroform. A film of the material was formed by solvent evaporation. The water permeability (see Figure 4) and limonene permeability were studied in these biopolymers and their nanocomposites. As for water permeability, PCL films with 1, 5 and 10% clay have a water permeability reduction of 54%, 63% and 63%, respectively, compared to the pure material. Water permeability improvements improve with the increase of clay content, although in the case of films with 5 and 10% clay water reduction is the same. As for limonene permeability, PCL films with 1, 5 and 10% clay content have a limonene permeability reduction of 18%, 49% and 25%, respectively, compared to the pure material. PCL films with 5% clay show the best limonene permeability values. The application of these nanocomposites give rise to the creation of very interesting materials, which can be used for example in the preservation of food sensitive to low molecular weight gases such as oxygen, steam and limonene.

## Claims

1. Use of nanocomposite materials to reinforce the electromagnetic radiation blocking in plastic packaging applications, wherein said materials comprise
a. a plastic matrix;
b. a nanoreinforcement added in a liquid or solid phase into the plastic matrix, wherein said nanoreinforcement is a clay with or without organic modification selected from montmorillonite, kaolinite, bentonite, smectite, hectorite, sepiolite, saponite, halloysite, vermiculite or mica and
c. optionally, an organic or hybrid substances intercalated in the laminar structure of the clay.

2. Use according to claim 1, **characterized in that** organic or hybrid substances intercalated in the laminar structure of clay, are selected from the group formed by PVOH, EVOH and derivates of the same family, biopolymers, phosphates, quaternary ammonium salts or combinations thereof.

3. Use according to claim 2 wherein the organic material intercalated in the laminar structure of the clay is hexadecyltrimethylammonium bromide.

4. Use according to any of claims 1 to 3, further comprising low molecular weight substances of active and/or bioactive nature, wherein said substances are selected from the group formed by ethanol, ethylene, essential oils, small-sized antimicrobial peptides either natural or obtained by genetic modification, natural or synthetic antioxidants, enzymes, probiotics, prebiotics, simbiotics, vitamins, minerals, marine oils, drugs or bioavailable calcium compounds.

5. Use according to any of claims 1 to 4, wherein the plastic matrix is selected from the group of PVOH, EVOH or derivates and biodegradable materials

6. Use according to claims 5, wherein the biodegradable materials are selected from polysaccharides, proteins, lipids, biodegradable polyesters or mixtures thereof of these and other polymers.

7. Use according to claim 6 wherein the biodegradable polyesters are selected from polylactic acid, polylactic-glycolic acid, adipic acid, polydroxybutyrate and its copolymers with valerates and derivatives thereof.

8. Use according to any of claims 1 to 7 wherein the clay is selected from vermiculite or caolinite.

9. Use according to any of claims 1 to 8 wherein the particles of clay have a size between 0.1 and 100 microns in D90.

10. Use according to claim 9 wherein the particles of clay have a size under 25 microns in D90.

11. Use according to claim 10 wherein the particles of clay have a size under 3 microns in D90.

12. Use according to claim 2 wherein the clay has been pretreated with a precursor of the expanding type.

13. Use according to claim 12, wherein the precursor of the expanding type is selected from DMSO, alcohols, acetates, water or mixtures thereof.

14. Use according to previous claims, wherein the nanocomposites are obtainable by the following process:
a) Reducing the size of the laminar particles by mechanical action,
b) Filtering the product of (a) until reaching an interval comprised from 0.1 to 100 microns.
c) Removal of the organic matter and crystalline oxides and hard particles.
d) Pre-treatment of laminar structures obtained in step (c) by means of precursors of the expanding type.
e) Adding of the laminar structures obtained in step (d) to a plastic matrix in solid or liquid phase.

15. Use according to claim 14 which further comprises a step (d') of intercalating in an aqueous base or with polar solvents, organic or hybrid substances in the laminar structure obtained in step (d).
